# EUROPEAN PATENT APPLICATION

(11) **EP 2 317 160 A2**
(43) Date of publication of application: **04.05.2011**
(21) Application number: 10425341.4
(22) Date of filing: 27.10.2010
(51) Int. Cl.: F16B 25/00

(54) **Double-thread screw for concrete**

(30) Priority: 27.10.2009 IT NA20090028 U
(71) Applicant: Tecfi S.p.A., 80122 Napoli (IT)
(72) Inventor: Bertamino, Giovanni, 80127 Napoli (IT)
(74) Representative: Comparone, Tommaso

(57) **Abstract**

A double-thread screw (1) for concrete comprises a hexagonal head (3) and a screw rod having, from the hexagonal head (3) toward a point (2), a metric screw thread (9), a smooth or not threaded portion (8), a self-threading portion (4) for concrete and a point (2). The self-threading portion (4) for concrete has two threads, i.e. a low thread (5) and a high thread (6), the high thread (6), as seen in a central longitudinal cross-section view thereof, having a side at an angle of 45 degrees and an opposite side at an angle of 10 degrees, with respect to a transversal axis of the screw.

## Description

The present invention relates to a double-thread screw for concrete.

Already there are screws of this kind such as those produced by Schafer - Peters GmbH in Öhringen (Germany). These screws are provided with a self-threading portion for concrete and, in an upper part of the screw projecting from the concrete, with a metric screw thread, which allows the same screw to be coupled with other threaded or not threaded members by means of a nut connection. However, the self-threading portion for concrete is not suitable to make particularly effective the screw and comfortable the installation thereof.

The Applicant is the owner of the patent for utility model No. 262856, that was filed on 26 September 2005 and granted on 12 June 2009, entitled *"Nuovo filetto per calcestruzzo dotato di forme particolari e gole di scarico inclinate, da utilizzare per viti per calcestruzzo a testa esagonale, falsa rondella, testa tonda o altra testa"* (Novel thread for concrete having particular shapes and sloping relieves, to be used for hexagonal head screws, flange head screws, round head screws or different, all for concrete). Said patent generally relates to a screw having a head and a screw rod with two threads, the one being high and the other low. The high thread is at a particular angle in order to make easier the penetration of the screw into the concrete and to obtain undercuts inside the concrete for reliably retaining the screw. In particular, if the screw is cross-sectioned by a plane containing the screw axis, the high thread forms a side at an angle of 45 degrees and an opposite side at an angle of 10 degrees, with respect to a transversal axis of the screw. The penetration of the screw is facilitated by V-shaped cuts in the high thread, cuts that achieve to break a concrete wall. Also the low thread "bites" the concrete co-operating in improving the screw retaining. In fact, as the traction external forces are transmitted onto the base material, such as concrete or solid material, through the lock between the screw thread and the base material on which the screw is installed, the double thread permits an extended transmission surface to the base material.

In particular, an object of the present invention is to provide a double-thread screw for concrete being more effective in its operation and more comfortable in its installation than the prior art double-thread screws for concrete.

In this context, the object is achieved by a double-thread screw for concrete that uses the thread according the above mentioned utility model patent in its self-threading portion for concrete.

Further features and advantages of the present invention will be mostly clear by an indicative and not limiting description of an example of making a double-thread screw for concrete as illustrated in the accompanying drawings in which:
- figure 1 is a side view of a double-thread screw for concrete according to the present invention;
- figure 2 is an enlarged longitudinal cross-section view of a detail of a high thread of a self-threading portion in the screw in figure 1; and
- figure 3 is a side view of the screw in figure 1 being installed in materials as seen in a fragmentary cross-section view.

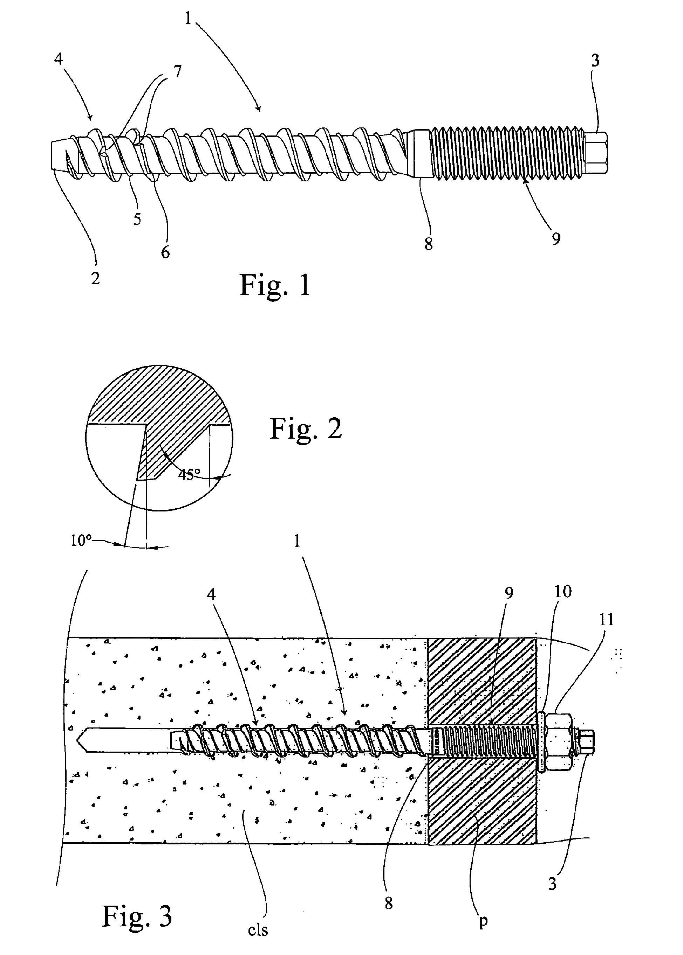

With reference to the side view of figure 1, the double-thread screw 1 for concrete according to the invention has a hexagonal head 3 and a screw rod having, from the hexagonal head 3 toward an opposite end point 2, a metric screw thread 9, a smooth or not threaded portion 8, a self-threading portion 4 for concrete. The self-threading portion 4 for concrete has two threads, i.e. a low thread indicated as 5 and a high thread indicated as 6.

As shown in figure 2, that is an enlarged longitudinal cross-section view of a detail of a high thread 6 of the self-threading portion 4 in the screw 1, the high thread 6, as seen in a central longitudinal cross-section view thereof, has a side at an angle of 45 degrees and an opposite side at an angle of 10 degrees, with respect to a transversal axis of the screw. The high thread 6 has v-shaped cut-outs 7 near the point 2.

With reference to figure 3, it is a side view of the screw I being installed in materials as seen in a cross-section view. The screw I is installed in a cylindrical hole (not denoted by a reference numeral) that is previously made of a set concrete cls. By a way of example, as shown, a suitably bored panel p is retained on the screw 1 by a washer 10 and a nut 11 that is screwed on the metric screw thread 9.

Advantageously, the hexagonal head 3, which serves to fit the screw 1 in the concrete cls, has its diagonal that is shorter than the external diameter of the portion having the metric screw thread. This allows the screw for concrete to be used both as a through fixing, i.e. first the member to be fixed is positioned and then the screw is installed, and as a not-through fixing, i.e. first the screw is installed and then the member to be fixed is positioned. A protection covering, e.g. Geomet 321, is laid off on the screw 1.

The screw according to the present invention, besides being particularly advantageous in reducing the effort required in its penetration into the base material, does not generate expansion forces inside the base material in which the screw is installed. In fact, after a suitable cylindrical hole is made, when the screw for concrete is installed, a double thread is created inside the concrete for a reliably retaining, without generating a pressure against the support on which the screw is fixed. Since the anchorage works by virtue of a lock that is formed in an interface between thread and concrete, the double thread in the self-threading portion of the screw according to the invention creates an extended force spreading that assures an optimal bearing performance.

## Claims

1. A double-thread screw (I) for concrete, comprising a hexagonal head (3) and a screw rod having, from the hexagonal head (3) toward a point (2), a metric screw thread (9), a smooth or not threaded portion (8), a self-threading portion (4) for concrete and a point (2), **characterised in that** the self-threading portion (4) for concrete has two threads, i.e. a low thread (5) and a high thread (6), the high thread (6), as seen in a central longitudinal cross-section view thereof, having a side at an angle of 45 degrees and an opposite side at an angle of 10 degrees, with respect to a transversal axis of the screw.

2. The screw (1) according to claim 1, in which the high thread (6) has v-shaped cut-outs (7) near the point (2).
